# FASCICULE DE BREVET EUROPEEN

(11) **EP 2 783 170 B1**
(45) Date de publication et mention de la délivrance du brevet: **25.04.2018**
(21) Numéro de dépôt: 12812714.9
(22) Date de dépôt: 26.11.2012
(51) Int. Cl.: F25B 21/00

(54) **GENERATEUR THERMIQUE MAGNETOCALORIQUE**
MAGNETOKALORISCHER WÄRMEGENERATOR
MAGNETOCALORIC HEAT GENERATOR

(30) Priorité: 24.11.2011 FR 1160722
(43) Date de publication de la demande: 01.10.2014
(73) Titulaire: Cooltech Applications S.A.S., 67810 Holtzheim (FR)
(72) Inventeur: MULLER, Christian, F-67000 Strasbourg (FR)
(74) Mandataire: Koelbel, Caroline
(86) Numéro de dépôt international: PCT/IB2012/002485
(87) Numéro de publication internationale: WO 2013/076571

(56) Documents cités:
- WO-A1-2004/059222
- US-A- 4 704 871
- MULLER P: "REFRIGERATION MAGNETIQUE, UNE REVOLUTION POUR DEMAIN?", REVUE PRATIQUE DU FROID ET DU CONDITIONNEMENT D'AIR, PYC EDITION SA., PARIS, FR, no. 924, 1 avril 2004 (2004-04-01), pages 59-63, XP001190727, ISSN: 0370-6699
- YAO G H ET AL: "Experimental study on the performance of a room temperature magnetic refrigerator using permanent magnets", INTERNATIONAL JOURNAL OF REFRIGERATION, ELSEVIER, PARIS, FR, vol. 29, no. 8, 1 décembre 2006 (2006-12-01), pages 1267-1273, XP027948434, ISSN: 0140-7007 [extrait le 2006-12-01]
- DEGREGORIA A J ET AL: "TEST RESULTS OF AN ACTIVE MAGNETIC REGENERATIVE REFRIGERATOR", TECHNICAL REPORT - LEST FOUNDATION, OSLO, NO, vol. 37, no. PART B, 1 janvier 1992 (1992-01-01), pages 875-882, XP000974592, ISSN: 0800-7780

## Description

### Domaine technique :

La présente invention concerne un générateur thermique magnétocalorique comportant au moins un assemblage d'au moins deux modules magnétocaloriques traversés par un fluide caloporteur mis en circulation par des moyens d'entraînement.

### Technique antérieure :

La technologie du froid magnétique à température ambiante est connue depuis plus d'une vingtaine d'années et on connaît les avantages qu'elle apporte en termes d'écologie et de développement durable. On connaît également ses limites quant à sa puissance calorifique utile et à son rendement. Dès lors, les recherches menées dans ce domaine tendent toutes à améliorer les performances d'un générateur thermique magnétocalorique en jouant sur les différents paramètres, tels que la puissance d'aimantation, les performances des matériaux magnétocaloriques, la surface d'échange entre le fluide caloporteur et les matériaux magnétocaloriques, la performance des échangeurs de chaleur, etc.

Un générateur thermique magnétocalorique comporte des matériaux magnétocaloriques qui ont la capacité de s'échauffer sous l'action d'un champ magnétique et qui se refroidissent lorsque ce champ magnétique est retiré ou réduit. Cet effet dit effet magnétocalorique est exploité pour réaliser un gradient thermique entre les deux extrémités dites extrémité chaude et extrémité froide d'un générateur thermique. Pour ce faire, l'on fait circuler un fluide caloporteur alternativement à travers les matériaux magnétocaloriques dans une première direction (vers l'extrémité chaude du générateur) lorsque le champ magnétique est appliqué ou augmenté, et dans la direction opposée (vers l'extrémité froide) lorsque le champ magnétique est retiré ou diminué.

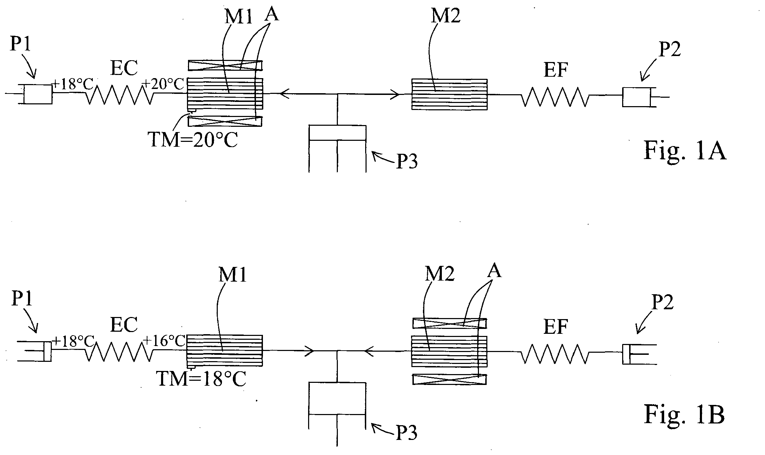

Or, le fait de réaliser un échange thermique avec une application extérieure sous la forme d'un système de chauffage, de réfrigération, de climatisation, de tempérage, etc. a pour effet de réduire et de limiter le gradient thermique au sein des matériaux magnétocaloriques, ce qui entraîne des pertes d'énergie thermique au sein du générateur. En effet, il est nécessaire d'utiliser une partie de l'énergie thermique produite pour ré-établir un gradient thermique, ce qui réduira la puissance thermique utile disponible. Cela est illustré en référence aux figures 1A et 1B représentant un ensemble magnétocalorique comportant deux étages magnétocaloriques M1 et M2 et dont l'extrémité froide est reliée thermiquement et fluidiquement à un échangeur thermique dit échangeur froid EF et à un piston P2 et l'extrémité chaude est reliée à un échangeur thermique dit échangeur chaud EC et à un piston P1. Un autre piston P3 est monté entre les deux étages. En considérant uniquement l'étage magnétocalorique M1 situé du côté chaud, au cours d'un cycle magnétocalorique, à l'issue d'une phase d'échauffement de l'étage magnétocalorique M1 due à l'application d'un champ magnétique par les aimants A, le fluide sortant de l'étage magnétocalorique M1 présente une température de 20°C, traverse l'échangeur chaud EC et atteint le piston P1 avec une température par exemple de 18°C suite à l'échange thermique réalisé dans l'échangeur chaud EC (voir figure 1A). Le champ magnétique est ensuite inversé, ainsi que le sens de déplacement du fluide, de sorte qu'à l'issue de la phase suivante de refroidissement, le fluide traverse d'abord l'échangeur chaud EC et arrive de ce fait dans l'étage magnétocalorique M1 à une température de 16°C due au nouvel échange thermique dans l'échangeur chaud EC (voir figure 1B). Or, la température du fluide (16°C) étant inférieure à la température du matériau constituant l'extrémité de l'étage magnétocalorique M1 (18°C), il y a un échange thermique qui est réalisé lorsque le fluide arrive dans l'étage magnétocalorique M1. Cet échange fait chuter le gradient thermique dans l'étage magnétocalorique M1 et engendre des pertes thermiques, réduisant de ce fait l'énergie thermique utile du générateur thermique correspondant. La même démonstration s'applique pour le côté froid.

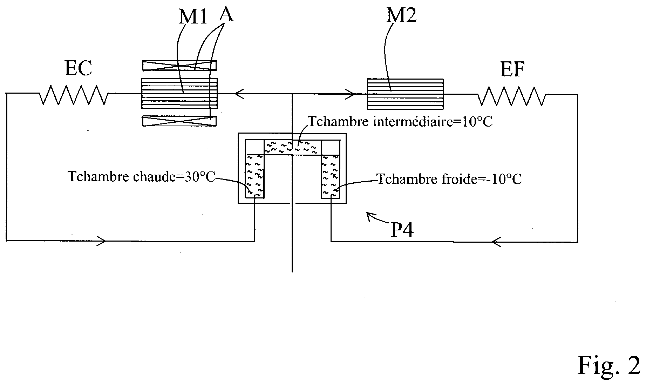

Un autre inconvénient à ce type de configuration concerne le nombre important de pistons ou moyens d'entraînement nécessaires pour déplacer le fluide caloporteur, ce qui engendre un volume d'encombrement important et qui nécessite une quantité importante d'énergie pour son actionnement.
Une solution connue pour réduire cet encombrement est représentée en figure 2. Elle consiste à rassembler les trois chambres des trois pistons des figures 1A et 1B et à réaliser un actionnement unique. Ainsi, lorsque les chambres chaude et froide de ce piston particulier P4 se remplissent, la chambre intermédiaire se vide, et inversement. Toutefois, dans cette solution, les chambres chaude, froide et intermédiaire sont positionnées à proximité les unes des autres et avec des ponts thermiques, ce qui peut entraîner un échange thermique entre les différentes chambres, et a pour conséquence une dégradation de l'efficacité du générateur thermique magnétocalorique.
Dans l'article de C. Muller « Réfrigération magnétique, une révolution pour demain? » (Revue pratique du froid et du conditionnement d'air, PYC Edition SA, Paris, FR, no. 924 du 01/04/2004, pages 59-63) et dans la publication US 4,704,871 les générateurs thermiques comportent deux modules magnétocaloriques reliés en série dans un circuit fermé de fluide caloporteur comprenant les échangeurs thermiques et une pompe de circulation dudit fluide, chaque module étant limité à un étage de matériau magnétocalorique ne permettant pas d'atteindre des gradients de température élevés. Le document US-A-4704871 décrit un générateur thermique selon le préambule de la revendication 1. Ainsi, il existe un besoin d'amélioration et d'optimisation de l'encombrement d'un générateur thermique magnétocalorique et de ses échanges thermiques avec une ou plusieurs applications extérieures.
En outre, un autre aspect susceptible d'être amélioré dans les générateurs thermiques magnétocaloriques concerne l'énergie totale nécessaire au fonctionnement du générateur thermique magnétocalorique, en vue d'améliorer le rendement dudit générateur.

Enfin, en plus de devoir présenter une efficacité énergétique exploitable, un générateur thermique magnétocalorique doit également présenter une taille ou un volume d'encombrement faible permettant par exemple de l'intégrer dans un appareil domestique, un véhicule, etc.

### Exposé de l'invention :

La présente invention a pour but répondre aux contraintes précitées et de proposer un générateur thermique magnétocalorique présentant une efficacité thermique augmentée.

Dans ce but, l'invention concerne un générateur thermique magnétocalorique ayant les caractéristiques de la revendication 1. De cette manière, il est possible d' « extraire » la moitié de la différence de température entre les deux étages magnétocaloriques reliés par un circuit de transfert. Cela a pour effet de ne pas dégrader le gradient de température présent dans les différents étages magnétocaloriques et d'assurer un échange thermique avec l'extérieur du générateur thermique sans en dégrader l'efficacité.
Selon l'invention, les échangeurs thermiques peuvent ainsi réaliser un échange thermique contrôlé pour que ledit circuit de transfert froid modifie la température dudit fluide caloporteur de telle sorte que le fluide caloporteur sortant de l'extrémité froide d'un des modules magnétocaloriques avec une température de sortie rentre dans l'extrémité froide de l'autre module magnétocalorique correspondant avec une température d'entrée sensiblement égale à la température de ladite extrémité froide et pour que ledit circuit de transfert chaud modifie la température dudit fluide caloporteur de telle sorte que le fluide caloporteur sortant de l'extrémité chaude d'un desdits modules magnétocaloriques avec une température de sortie rentre dans l'extrémité chaude de l'autre module magnétocalorique correspondant avec une température d'entrée sensiblement égale à la température de ladite extrémité chaude. Par l'expression sensiblement égale, on comprend que la température du fluide caloporteur est égale à la température de l'extrémité en question avec une différence maximale de température correspondant à quarante pourcent de l'effet magnétocalorique (dépendant lui-même du champ magnétique).

Il en résulte qu'à tout instant du cycle magnétocalorique, la température moyenne du fluide caloporteur rentrant dans la chambre d'un piston est égale à la température moyenne du fluide caloporteur sortant des autres chambres de piston.

Selon l'invention, lesdits modules magnétocaloriques peuvent comporter au moins deux sous-modules magnétocaloriques comprenant chacun au moins deux étages magnétocaloriques et dans lesdits modules magnétocaloriques, lesdits sous-modules peuvent être montés en parallèle.

De préférence, lesdits moyens d'entraînement peuvent être reliés entre des extrémités consécutives des étages magnétocaloriques qui ne sont pas situées au niveau des cotés froid et chaud des modules magnétocaloriques.

Selon l'invention, ledit sous-module peut comporter au moins deux groupes d'étages magnétocaloriques, lesdits groupes étant reliés fluidiquement entre eux par un moyen d'entraînement du fluide caloporteur, et dans chaque groupe, les étages magnétocaloriques peuvent être reliés en série.

Dans une variante, un échangeur thermique intermédiaire peut être disposé entre deux étages magnétocaloriques consécutifs desdits groupes.

En outre, ledit échangeur thermique intermédiaire peut être relié à l'échangeur thermique d'un desdits circuits de transfert. A cet effet, tous ou certains des échangeurs thermiques intermédiaires situés du côté chaud du générateur thermique magnétocalorique peuvent être reliés à l'échangeur thermique du circuit de transfert chaud et tous ou certains des échangeurs thermiques intermédiaires situés du côté froid du générateur thermique magnétocalorique peuvent être reliés à l'échangeur thermique du circuit de transfert froid.

En variante, les échangeurs thermiques intermédiaires des groupes reliés au circuit de transfert froid peuvent être reliés entre eux et les échangeurs thermiques intermédiaires des groupes reliés au circuit de transfert chaud peuvent être reliés entre eux. Cela permet notamment d'accélérer l'obtention d'un gradient thermique entre les côtés froid et chaud du générateur thermique magnétocalorique.

Dans une variante de réalisation, lesdits moyens d'entraînement peuvent être réalisés sous la forme de pistons à simple effet et la chambre de chaque piston peut être reliée fluidiquement aux étages magnétocaloriques d'un module magnétocalorique.

Dans une autre variante, lesdits moyens d'entraînement peuvent être réalisés sous la forme d'un piston à double effet, chaque chambre dudit piston pouvant être reliée fluidiquement aux étages magnétocaloriques d'un module magnétocalorique.

Le générateur selon l'invention peut en outre comporter un système magnétique agencé pour soumettre les étages magnétocaloriques à un champ magnétique variable pour que les étages magnétocaloriques situés à l'extrémité froide et les étages magnétocaloriques situés à l'extrémité chaude sont constamment dans une phase différente d'échauffement ou de refroidissement.

En outre, selon l'invention, afin d'optimiser l'encombrement du générateur thermique, les étages magnétocaloriques peuvent être montés dans des supports en forme de disques, chaque support comprenant au moins un étage magnétocalorique de chaque module magnétocalorique.

### Description sommaire des dessins :

La présente invention et ses avantages apparaîtront mieux dans la description suivante de modes de réalisation donnés à titre d'exemples non limitatifs, en référence aux dessins annexés, dans lesquels:
- les figures 1A et 1B représentent schématiquement un ensemble magnétocalorique selon l'art antérieur aux cours de deux phases successives d'un cycle magnétocalorique,
- la figure 2 représente un autre ensemble magnétocalorique selon l'art antérieur,
- la figure 3 est une vue schématique d'un ensemble magnétocalorique selon l'invention, dans une première phase d'un cycle magnétocalorique,
- la figure 4 représente l'ensemble magnétocalorique de la figure 3 dans la phase suivante du cycle magnétocalorique,

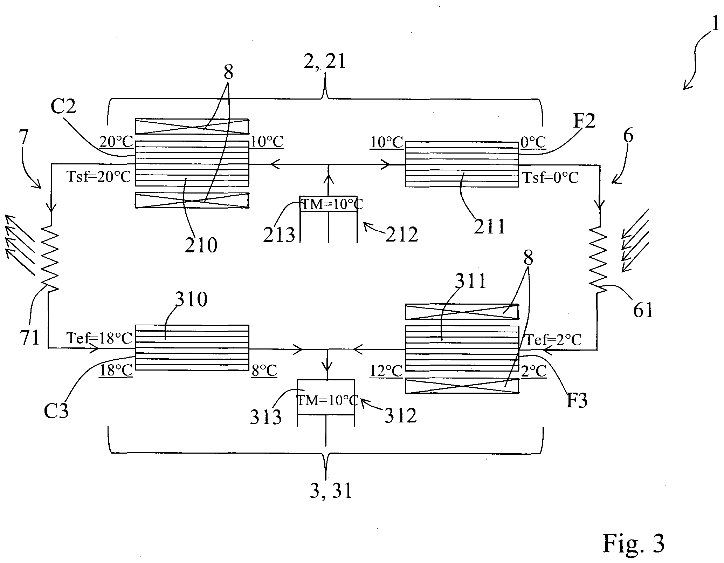

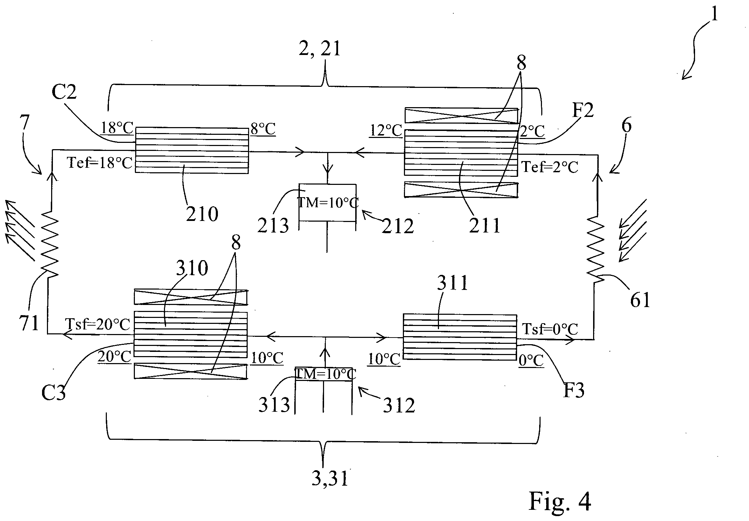

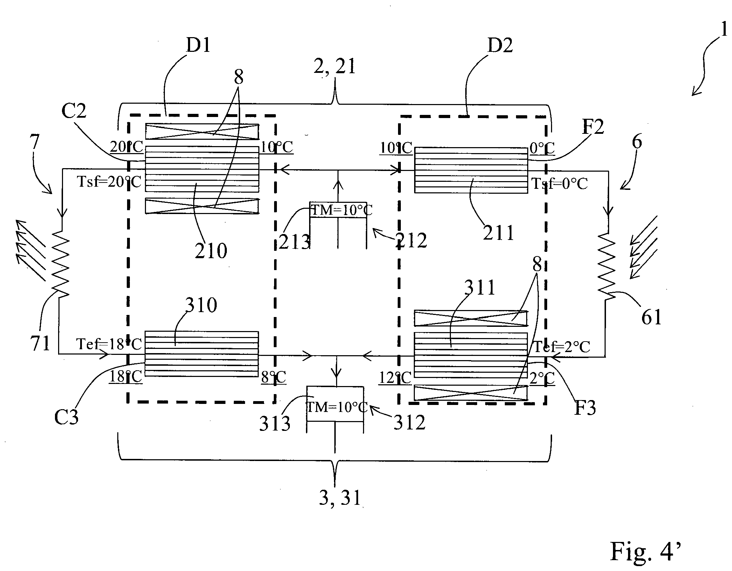

- la figure 4' représente l'ensemble magnétocalorique de la figure 3 dans lequel sont schématisés des disques de support d'étages magnétocaloriques,

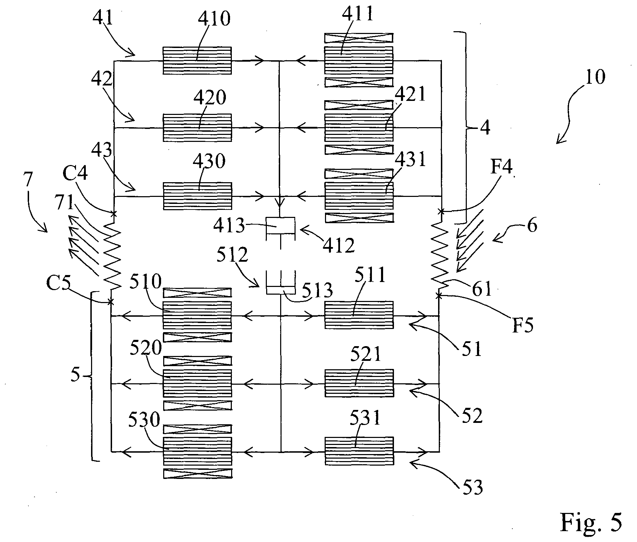

- la figure 5 est une vue schématique d'un ensemble magnétocalorique selon une variante de l'invention,

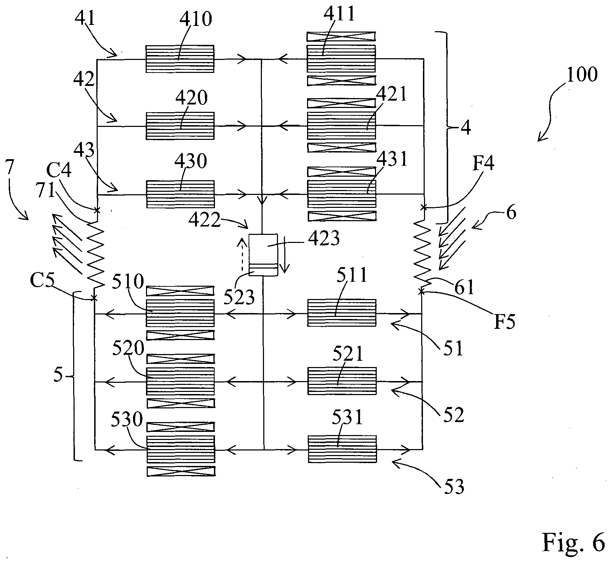

- la figure 6 est une vue schématique d'un ensemble magnétocalorique selon une autre variante de l'invention,

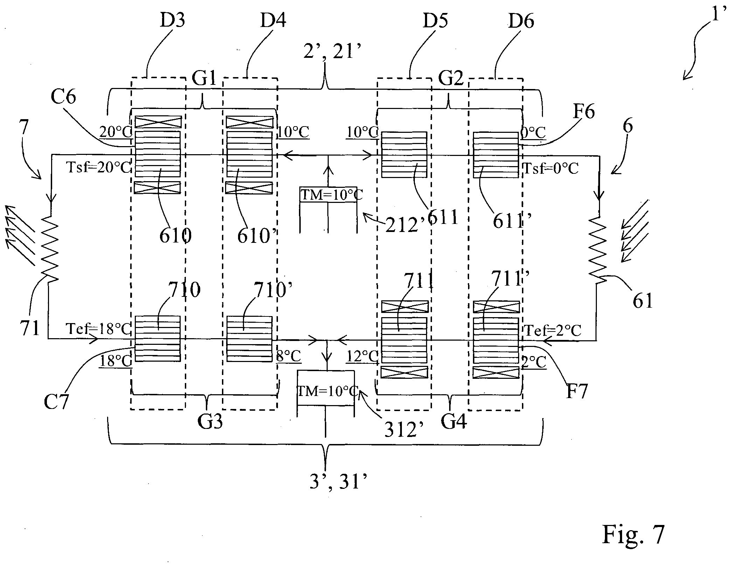

- la figure 7 est une vue schématique d'une variante du générateur thermique 1 des figures 3 et 4,

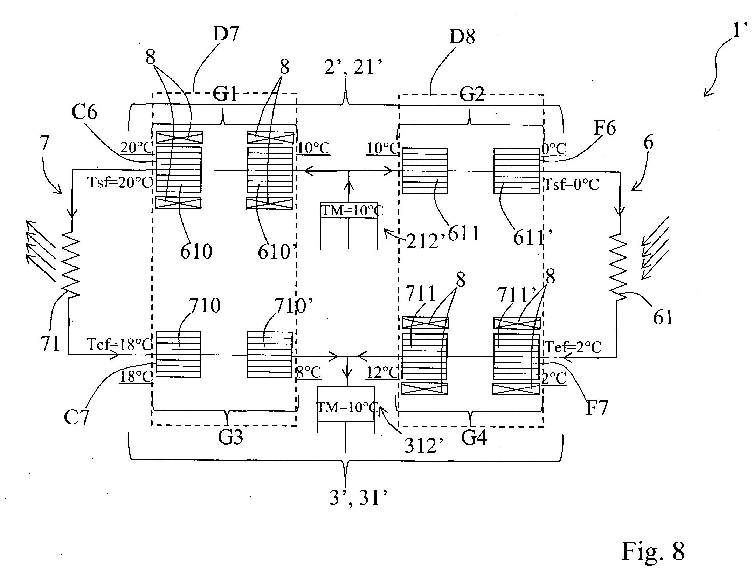

- la figure 8 est une vue schématique d'une variante du générateur thermique de la figure 7, et

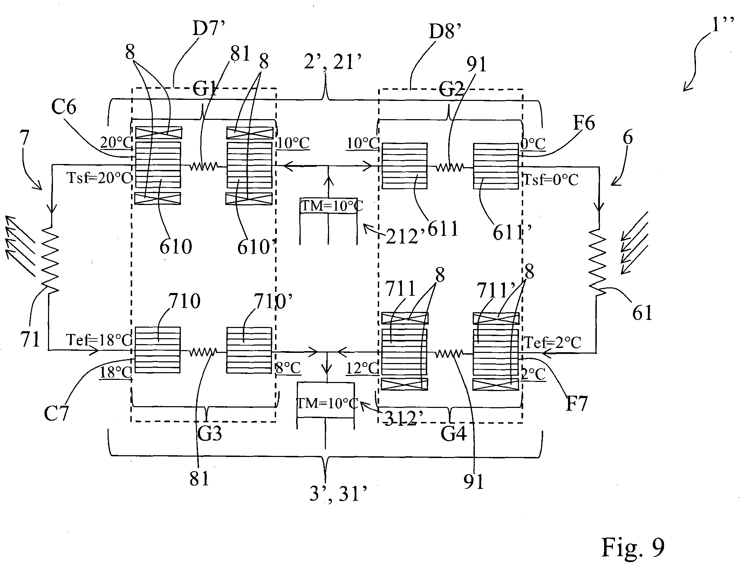

- la figure 9 est une vue schématique d'une variante du générateur thermique de la figure 8.

### Illustrations de l'invention :

Dans les exemples de réalisation illustrés, les pièces ou parties identiques portent les mêmes références numériques.

La figure 3 représente un assemblage de deux modules magnétocaloriques 2, 3 d'un générateur thermique 1 selon l'invention. Chaque module magnétocalorique 2, 3 comporte deux étages magnétocaloriques 210, 211, 310, 311. Chaque étage magnétocalorique 210, 211, 310, 311 comporte au moins un matériau magnétocalorique ayant la capacité de se refroidir et de s'échauffer sous l'effet de variations d'un champ magnétique.

Dans l'exemple de réalisation décrit en référence à la figure 3, les modules magnétocaloriques 2, 3 comportent un seul sous-module 21, 31 comportant à son tour les deux étages magnétocaloriques 210, 211, 310, 311. L'invention n'est toutefois pas liée à l'intégration de deux étages magnétocaloriques 210, 211, 310, 311 dans chaque sous-module magnétocalorique 21, 31. Il est envisageable d'intégrer un nombre supérieur de tels étages magnétocaloriques 210, 211, 310, 311. De la même manière, il est possible d'intégrer au moins deux sous-modules magnétocaloriques reliés en parallèle dans chaque module magnétocalorique. Une telle configuration est plus particulièrement représentée dans les figures 5 et 6.

Les étages magnétocaloriques 210, 211, 310, 311 sont reliés fluidiquement par un fluide caloporteur, de préférence un liquide. A cet effet, les étages magnétocaloriques 210, 211, 310, 311 sont perméables au fluide caloporteur et comportent des passages de fluide débouchants obtenus par un assemblage de plaques de matériau(x) magnétocalorique(s) espacées les unes des autres. Toute autre forme de réalisation permettant au fluide caloporteur de traverser lesdits étages magnétocaloriques 210, 211, 310, 311 peut, bien entendu, convenir. En outre, l'invention n'est pas limitée à l'utilisation d'étages magnétocaloriques 210, 211, 310, 311 dont la structure est rectiligne tel que cela est représenté dans les figures annexées 3 à 6, mais s'étend à toute autre structure telle que circulaire ou une structure combinée circulaire/rectiligne.

Selon l'invention, la configuration particulière décrite ci-après consistant à relier fluidiquement les deux modules magnétocaloriques 2, 3 par deux circuits de transfert 6 et 7 permet de réaliser des échanges thermiques avec deux circuits extérieurs sans dégrader le gradient de température établi dans chacun desdits étages magnétocaloriques 210, 211, 310, 311. Cette liaison entre les modules magnétocaloriques 2 et 3 est réalisée de manière continue et permanente, c'est-à-dire que lesdits modules magnétocaloriques sont constamment reliés entre eux par l'intermédiaire des circuits de transfert 6 et 7.

A cet effet, les étages magnétocaloriques 210, 211, 310, 311 de chaque sous-module magnétocalorique 21, 31 sont reliés entre eux par un circuit de fluide caloporteur pourvu d'un piston 212, 312 simple effet disposé entre les deux étages magnétocaloriques 210, 211, 310, 311 d'un sous-module magnétocalorique 21, 31 pour faire circuler le fluide caloporteur. En d'autres termes, la chambre 213, 313 de chaque piston 212, 312 est reliée fluidiquement à tous les étages magnétocaloriques 210, 212, respectivement 310, 311 d'un module magnétocalorique 2, 3. Dans chaque sous-module magnétocalorique 21, 31, les deux étages magnétocaloriques 210, 211, 310, 311 sont constamment dans une phase magnétique différente, c'est-à-dire que lorsqu'un desdits étages magnétocaloriques 210, 311 subit une élévation de température due à l'application d'un champ magnétique, l'autre étage magnétocalorique 211, 310, subit une diminution de sa température due au retrait ou à la diminution du champ magnétique. Le fluide caloporteur circule à cet effet simultanément dans deux directions opposées dans les étages magnétocaloriques 210, 211, 310, 311 correspondants de chaque sous-module magnétocalorique 21, 31. On obtient ainsi un assemblage parallèle entre la branche froide et la branche chaude dudit générateur constituée respectivement des étages magnétocaloriques reliés auxdits échangeurs froid 61 et chaud 71. Le mode de circulation du fluide dans ces étages en fonction de leur phase magnétique est décrit plus précisément dans la demande de brevet FR 2 937 793 au nom de la demanderesse. Ainsi, en comparaison avec les générateurs de l'art antérieur décrits ci-dessus et illustrés aux figures 1A et 1B, les moyens d'entraînement du fluide ou pistons 212, 312 sont montés uniquement entre les étages magnétocaloriques 210, 211, 310, 311 des sous-modules 21, 31. Cela permet de réduire le nombre de pistons ou dispositifs aptes à déplacer le fluide caloporteur et donc de réduire le nombre de composants du générateur, ainsi que son encombrement et son coût. Un générateur thermique 1 selon l'invention, représenté aux figures 3 et 4, comporte deux pistons 212, 312 pour quatre étages magnétocaloriques 210, 211, 310, 311, tandis que dans certains des générateurs connus, six pistons sont utilisés pour déplacer le fluide caloporteur à travers quatre étages thermiques. De ce fait, dans cette configuration, l'énergie nécessaire au déplacement du fluide caloporteur est également réduite, permettant une amélioration du rendement du générateur. Enfin, un tel générateur thermique 1 permet, tout en étant compact et utilisant un nombre de composants limité, de supprimer les ponts thermiques entre les différentes chambres des pistons.

Les étages magnétocaloriques 210, 211, 310, 311 comportent des matériaux magnétocaloriques aptes à établir un gradient de température entre leurs deux extrémités d'entrée et de sortie du fluide caloporteur. Ce gradient est obtenu grâce à la succession de cycles magnétocaloriques qui consistent à :
- appliquer un champ magnétique sur un étage magnétocalorique, ce qui entraîne un échauffement de ce dernier puis à faire circuler le fluide caloporteur de l'extrémité dite extrémité froide" vers l'extrémité dite "extrémité chaude" de l'étage magnétocalorique (première phase du cycle), puis
- à retirer ou à diminuer (le champ magnétique, ce qui entraîne un refroidissement de l'étage magnétocalorique, puis à faire circuler le fluide caloporteur de l'extrémité chaude vers l'extrémité froide de l'étage magnétocalorique (deuxième phase du cycle).

Dans chaque sous-module magnétocalorique 21, 31, les étages magnétocaloriques 210, 211, 310, 311 présentent des matériaux magnétocaloriques différents aptes à réaliser des gradients de température décalés et les étages thermiques 210, 211, 310, 311 sont montés dans les sous-modules 21, 31 de telle sorte que l'étage thermique 211, 311 comportant l'extrémité la plus froide F2, respectivement F3 est monté du côté froid du générateur (côté situé à droite sur les figures 3 et 4) et est directement relié au circuit de transfert 6 froid et que l'étage thermique 210, 310 comportant l'extrémité la plus chaude C2, respectivement C3 est monté du côté chaud du générateur (côté situé à gauche sur les figures 3 et 4) et est directement relié au circuit de transfert 7 chaud.

Les étages magnétocaloriques 211, 311 situés du côté froid du générateur thermique 1 ont sensiblement le même gradient thermique et le même effet magnétocalorique, c'est-à-dire qu'en régime établi, d'une part, la différence de température entre les deux extrémités des étages 211, 311 est la même et que, d'autre part, le décalage de température ou saut de température des matériaux constituant ces étages magnétocaloriques 211, 311 est le même pour un même cycle magnétique . Il en est de même pour les étages magnétocaloriques 210, 310 situés du côté chaud du générateur thermique 1. En outre, l'effet magnétocalorique, à savoir le saut ou décalage de température dû à la variation de champ magnétique est sensiblement le même pour tous les étages magnétocaloriques 210, 211, 310, 311 de ce générateur thermique 1.

Les étages magnétocaloriques 210, 211 et 310, 311 respectivement des extrémités chaudes et froides sont reliés fluidiquement par un circuit de transfert 7, 6 comprenant un échangeur thermique 71, 61 respectivement chaud et froid. Les deux étages magnétocaloriques 210, 310 et 211, 311 reliés par un circuit de transfert 7, 6 sont également constamment dans une phase magnétique différente, c'est-à-dire que lorsqu'un desdits étages magnétocaloriques 210, 311 est soumis à un champ magnétique (par exemple d'une intensité de 1,2 Teslas), l'autre étage magnétocalorique 310, 211 auquel il est relié par le circuit de transfert 7, 6 n'est soumis à aucun champ magnétique, et inversement.

Le changement d'intensité du champ magnétique appliqué aux étages magnétocaloriques 210, 211, 310, 311 peut être réalisé par un système magnétique 8 comportant des aimants permanents associés ou non à des pièces polaires et en déplacement relatif par rapport auxdits étages magnétocaloriques 210, 211, 310, 311, ou par une bobine alimentée électriquement, ou par tout autre moyen équivalent.

Les échangeurs 61, 71 des circuits de transfert 6, 7, réalisent un échange thermique contrôlé entre le côté froid du générateur et un premier circuit extérieur (non représenté) et entre le côté chaud du générateur et un second circuit extérieur (non représenté). En effet, et selon l'invention, les échangeurs thermiques 61, 71 sont paramétrés pour échanger avec les circuits extérieurs, en cours de fonctionnement, une quantité d'énergie correspondant de préférence à la différence de température entre les deux extrémités correspondantes des étages magnétocaloriques 210, 211 et 310, 311 reliés par le circuit de transfert 6, 7. Ce paramétrage est réalisé grâce aux surfaces d'échange dans l'échangeur 61, 71, au choix des fluides ou liquides caloporteurs en terme de capacité d'échange, au débit de ces fluides de telle sorte que l'énergie échangée dans l'échangeur 61, 71 avec fluide caloporteur circulant dans le générateur thermique 1 selon l'invention, correspond sensiblement à la différence de la température de ce fluide caloporteur lorsqu'il entre dans un étage magnétocalorique 210, 211, 310, 311 subissant l'effet magnétocalorique et de la température de ce fluide lorsqu'il en sort.

Une telle mesure permet de rapprocher au mieux la température du fluide caloporteur ayant traversé le circuit de transfert 6, 7 avec la température de l'extrémité de l'étage magnétocalorique correspondant 210, 211, 310, 311. Il en résulte que, d'une part, le fluide caloporteur ne perturbera pas le gradient thermique dans l'étage magnétocalorique 210, 211, 310, 311 concerné et, d'autre part, que l'énergie thermique échangée avec l'extérieur soit exploitée positivement et n'engendre pas une perte d'efficacité du générateur thermique 1.

Les figures 3 et 4 représentent à cet effet les deux phases du cycle magnétocalorique des étages magnétocaloriques 210, 211, 310, 311 et indiquent les températures obtenues lors du fonctionnement du générateur thermique 1 selon l'invention (les températures des matériaux magnétocaloriques formant les extrémités des étages magnétocaloriques sont soulignées). Les sous-modules 21 et 31 sont reliés fluidiquement et par l'intermédiaire des échangeurs thermiques 61, 71 et leurs étages magnétocaloriques 210, 211, 310, 311 sont soumis à une sollicitation magnétique inverse.

En considérant la figure 3, l'on constate qu'en régime établi, à l'issue de l'échauffement de l'étage magnétocalorique 210 dû à l'application d'un champ magnétique par le système magnétique 8, le fluide caloporteur sortant de l'étage magnétocalorique 210 à la température Tsf de 20°C traverse l'échangeur thermique 71 du circuit de transfert chaud 7. Il rentre ensuite dans l'étage magnétocalorique 310 à la température Tef de 18°C, qui correspond, grâce à l'échange thermique contrôlé réalisé dans l'échangeur 71, à la température du matériau constituant l'extrémité correspondante de l'étage magnétocalorique 310 qui a subit un refroidissement. Le fluide sort de l'étage magnétocalorique 310 avec une température de 8°C puis est mené jusqu'à la chambre commune 313 du piston 312. Simultanément, le fluide sortant à la température Tsf de 0°C de l'étage magnétocalorique 211 ayant subit un refroidissement, traverse l'échangeur thermique 61 du circuit de transfert 6 froid et intègre l'étage magnétocalorique 311 à la température Tef de 2°C, qui correspond à la température du matériau constituant l'extrémité correspondante de l'étage magnétocalorique 311 qui a subit un échauffement. Le fluide caloporteur sort de l'étage magnétocalorique 311 avec une température de 12°C puis est mené jusqu'à la chambre commune 313 du piston 312 et est mélangé avec le fluide issu de l'étage magnétocalorique 311. La température moyenne TM du fluide de cette chambre commune correspond de ce fait à 10°C.

Lors de la phase suivante représentée à la figure 4, à l'issue de l'échauffement de l'étage magnétocalorique 310 dû à l'application d'un champ magnétique, le fluide entrant dans cet étage magnétocalorique 310 est à la température de 10°C (correspondant à la température de la chambre commune 313 et à celle du matériau constituant l'extrémité correspondante de l'étage magnétocalorique 310 ayant subit une élévation de température de 2°C due à l'effet magnétocalorique). Le fluide sort de cet étage magnétocalorique 310 à la température Tsf de 20°C, traverse l'échangeur thermique 71 et rentre dans l'étage magnétocalorique 210 à la température Tef de 18°C, qui correspond à la température du matériau constituant l'extrémité correspondante de cet étage magnétocalorique 210 qui a subit un cycle de refroidissement. Le fluide sort de cet étage magnétocalorique 210 à la température de 8°C puis est mené jusqu'à la chambre commune 213 du piston 212. Simultanément, le fluide entrant dans l'étage magnétocalorique 311 est à la température de 10°C (correspondant à la température de la chambre 313 du piston 312 et à celle du matériau constituant l'extrémité correspondante de l'étage magnétocalorique 311 ayant subit une diminution de température de 2°C due à l'effet magnétocalorique). Le fluide sort de cet étage magnétocalorique 311 à la température Tsf de 0°C, traverse l'échangeur thermique 61 et rentre dans l'étage magnétocalorique 211 à la température Tef de 2°C, qui correspond à la température du matériau constituant l'extrémité correspondante de l'étage magnétocalorique 211 qui a subit un échauffement. Le fluide sort de l'étage magnétocalorique 211 à la température de 12°C puis est mené jusqu'à la chambre commune 213 du piston 212. La température moyenne du fluide dans cette chambre commune 213 correspond de ce fait à 10°C.

L'on constate que grâce à l'invention, le passage du fluide caloporteur dans les échangeurs thermiques 61, 71 permet de mettre ce fluide à une température correspondant sensiblement à la température du matériau formant l'extrémité de l'étage magnétocalorique que va traverser le fluide. De ce fait, l'échange thermique avec les applications extérieures, aussi bien du côté chaud que du côté froid, n'a pas d'incidence sur le gradient thermique du générateur thermique 1 et n'engendre de ce fait aucune perte thermique, comme cela est le cas dans les générateurs similaires connus. Bien entendu, il est nécessaire d'isoler thermiquement le circuit fluidique pour garantir ce résultat.

En outre, cette configuration avec deux modules magnétocaloriques 2 et 3 reliés au niveau de leurs extrémités par des circuits de transfert froid 6 et chaud 7, associée à une distribution de fluide réalisée uniquement entre les étages magnétocaloriques 210, 211, 310, 311, permet d'obtenir sensiblement la même température de fluide dans les chambres 213 et 313 des pistons 212 et 312.

De plus, d'une manière générale, cette configuration avec des modules magnétocaloriques reliés au niveau de leurs extrémités par des circuits de transfert froid 6 et chaud 7 permet de réaliser un générateur thermique dont l'encombrement est optimisé et réduit. En effet, cette configuration permet d'intégrer les étages magnétocaloriques situés d'un même côté chaud ou froid de plusieurs modules magnétocaloriques dans des supports communs, par exemple réalisés sous la forme de disques.

A cet effet, la figure 4' représente le générateur thermique 1 selon l'invention dans lequel deux disques support D1 et D2 sont représentés schématiquement et supportent les étages magnétocaloriques 210 et 310, respectivement 211 et 311, appartenant aux deux modules. Le système magnétique 8 est représenté de manière schématique dans les figures, et plus particulièrement dans la figure 4'. En effet, les disques D1 et D2 supportant les étages magnétocaloriques sont fixes et la variation du champ magnétique est réalisée par le déplacement d'un assemblage d'aimants permanents. Ces derniers se trouvent de ce fait positionnés de part et d'autre des étages magnétocaloriques, à l'extérieur des disques D1 et D2, à gauche et à droite des étages magnétocaloriques et non au-dessus et au-dessous comme cela est représenté dans les figures.

Le générateur thermique 1 comporte de préférence plus de deux modules thermiques 2, 3 et l'ensemble des étages magnétocaloriques est monté dans les deux disques support D1 et D2. Ainsi, les étages reliés au circuit de transfert froid 6 sont intégrés dans un disque D2 et les étages reliés au circuit de transfert chaud 7 sont intégrés dans un disque D1. Ces deux disques D1 et D2 forment ainsi les deux branches chaude et froide montées en parallèle dans ledit générateur. On obtient ainsi un générateur thermique 1 performant et compact.

Une variante de réalisation est représentée à la figure 5. Le générateur thermique 10 présente un assemblage de deux modules magnétocaloriques 4 et 5 comportant chacun trois sous-modules magnétocaloriques 41, 42, 43 et 51, 52, 53, reliés en parallèle entre eux dans les modules 4, 5 correspondants. Les deux modules magnétocaloriques 4 et 5 sont reliés par un circuit de transfert 6 froid à leurs extrémités froides F4 et F5 et par un circuit de transfert 7 chaud à leurs extrémités chaudes C4 et C5. Deux pistons simple effet 412 et 512 mettent en circulation le fluide caloporteur à travers le générateur thermique 10. A cet effet, la chambre 413, respectivement 513, de chaque piston 412, respectivement 512, est reliée à tous les étages magnétocaloriques 410, 411, 420, 421, 430, 431 respectivement 510, 511, 520, 520, 530, 531 d'un module magnétocalorique 4, respectivement 5. Une telle configuration, bien que comportant plus d'étages magnétocaloriques, reste compacte, ne nécessite pas plus de moyens d'entraînement du fluide caloporteur que le générateur thermique 1 des figures 3 et 4 et présente les mêmes avantages que ceux décrits en regard dudit générateur thermique 1. Ici également, tous les étages magnétocaloriques 410, 420, 430, 510, 520, 530, respectivement 411, 421, 431, 511, 521, 531 peuvent être montés dans deux disques supports non représentés afin d'optimiser le volume d'encombrement du générateur thermique 10.

Une autre variante de réalisation est représentée à la figure 6. Elle illustre un générateur thermique 100 se distinguant du générateur thermique 10 de la figure 5 par le moyen d'entraînement du fluide caloporteur. En effet, un seul piston 422 met en circulation le fluide caloporteur à travers ce générateur thermique 100. Ce piston 422 est à double effet et comporte deux chambres 423 et 523 dont chacune est reliée à tous les étages magnétocaloriques 410, 411, 420, 421, 430, 431 respectivement 510, 511, 520, 520, 530, 531 d'un module magnétocalorique 4, respectivement 5. En d'autres termes, un unique moyen d'entraînement sous la forme d'un piston à double effet 422 dont chaque chambre 423, 523 communique avec tous les étages magnétocaloriques 410, 411, 420, 421, 430, 431, 510, 511, 520, 521, 530, 531 des deux modules magnétocaloriques 4, 5 réalise l'entraînement du fluide caloporteur. La compacité du générateur thermique 100 est de ce fait augmentée. Une telle configuration est possible car, comme cela a été indiqué plus haut, la température du fluide caloporteur est sensiblement la même dans les deux chambres 423 et 523 du piston 422, de sorte que les ponts thermiques existant entre les deux chambres 423 et 523 adjacentes seront très limités (moins de 0,1°C) et n'auront pas d'effet négatif sur le rendement du générateur thermique 100. Bien entendu, ce générateur thermique 100 présente les mêmes avantages que ceux décrits en regard du générateur thermique 10 représenté à la figure 5. Ici également, tous les étages magnétocaloriques 410, 420, 430, 510, 520, 530, respectivement 411, 421, 431, 511, 521, 531 peuvent être montés dans deux disques supports afin d'optimiser le volume d'encombrement du générateur thermique 100.

Le générateur thermique 1' représenté à la figure 7 est une variante du générateur thermique 1 des figures 3 et 4. Il présente les mêmes avantages que ce dernier et s'en distingue essentiellement par la présence de plusieurs étages magnétocaloriques 610, 610', 611, 611', 710, 710', 711, 711' dans chacun des deux modules thermiques 2', 3' représentés. Dans cette variante également, les modules thermiques 2' et 3' comportent un seul sous module 21', 31'. Bien que cela ne soit pas illustré, l'invention prévoit également de réaliser des modules 2', 3' comportant plusieurs sous-modules. Le fait d'augmenter le nombre d'étages magnétocaloriques permet d'augmenter le gradient de température obtenu en régime établi entre les extrémités chaudes C6, C7 et froides F6, F7 du générateur thermique. A cet effet, dans les sous-modules 2', 21' et 3', 31', les étages sont regroupés en deux groupes d'étages G1, G2 et G3, G4 et reliés en série'. Pour optimiser encore le gradient thermique, les étages magnétocaloriques 610, 610', 611, 611', 710, 710', 711, 711' de chaque module 2', 3' comportent des matériaux magnétocaloriques dont les températures de Curie sont différentes et croissantes de l'extrémité froide F6, F7 à l'extrémité chaude C6, C7 correspondante.

Ici également, tous les étages magnétocaloriques 610, 610', 611, 611', 710, 710', 711, 711' peuvent être montés dans des disques supports afin d'optimiser le volume d'encombrement du générateur thermique 1'. Le générateur thermique 1' représenté à la figure 7 comporte à cet effet quatre disques représentés schématiquement et identifiés par les références D3, D4, D5, D6.

Pour augmenter encore la compacité du générateur thermique, il est possible de monter les étages magnétocaloriques 610, 610', 710, 710', respectivement 611, 611', 711, 711' dans deux disques uniquement, à savoir les disques D7 et D8 représentés schématiquement dans la figure 8.

La figure 9 représente un générateur thermique 1" selon une autre variante de celle représentée à la figure 7 dans laquelle des échangeurs thermiques intermédiaires 81, 91 sont disposés en série dans le circuit fluidique, entre les étages magnétocaloriques 610 et 610', 710 et 710', respectivement 611 et 611', 711 et 711' formant lesdits groupes G1, G2. Ces échangeurs thermiques intermédiaires 81, 91 peuvent être par exemple reliés à un dispositif à effet Peltier ou analogue et sont aptes à modifier la température desdits étages magnétocaloriques 610, 610', 611, 611', 710, 710', 711, 711'. Ces échangeurs thermiques intermédiaires 81, 91 peuvent réaliser un échange thermique de manière continue, ou pendant une partie seulement du cycle de fonctionnement du générateur thermique 1". Ils peuvent ainsi avoir pour objet de pré-refroidir ou mettre à température initiale optimale les étages magnétocaloriques 611, 611', 711, 711' situés du côté du circuit d'échange froid 6 au démarrage du générateur thermique 1" de sorte que lesdits étages atteignent plus rapidement une température proche de leur température de Curie, à savoir la température à laquelle leur effet magnétocalorique est le plus important. De la même manière, les échangeurs thermiques intermédiaires 81 montés du côté du circuit d'échange chaud 7 peuvent servir à pré-réchauffer ou mettre à température initiale optimale les étages magnétocaloriques 610, 610', 710, 710' situés du côté du circuit d'échange chaud 7 au démarrage du générateur thermique 1" de sorte que lesdits étages atteignent plus rapidement une température proche de leur température de Curie, à savoir la température à laquelle leur effet magnétocalorique est le plus important. Cette mise à température initiale optimale permet d'obtenir plus rapidement le régime établi dans lequel le gradient de température entre le côté chaud et le côté froid du générateur thermique 1" est atteint. Cela permet d'augmenter la puissance utile disponible du générateur thermique 1" . Dans une variante de réalisation non illustrée, les échangeurs thermiques intermédiaires 81 situés du côté du circuit d'échange froid 6 peuvent être reliés en série avec l'échangeur thermique froid 61 et les échangeurs thermiques intermédiaires 91 situés du côté du circuit d'échange chaud 7 peuvent être reliés en série avec l'échangeur thermique chaud 71.

Un générateur thermique 1, 10, 100, 1', 1" tel que décrit permet de ce fait d'optimiser à la fois ses échanges thermiques et son encombrement ce, tout en améliorant ses performances par rapport à l'art antérieur.

### Possibilités d'application industrielle :

Il ressort clairement de cette description que l'invention permet d'atteindre les buts fixés, à savoir échanger de l'énergie thermique avec l'extérieur du générateur thermique magnétocalorique sans dégrader l'énergie disponible ni le gradient de température dans les différents étages magnétocaloriques afin d'améliorer le rendement du générateur. Cela est rendu possible par la présence de la liaison fluidique et de l'échange thermique contrôlé entre les deux modules magnétocaloriques 2 et 3, 2' et 3' ainsi que 4 et 5 travaillant en opposition et reliés à leurs extrémités chaudes C2, C3, C4, C5, C6, C7 et froides F2, F3, F4, F5, F6, F7 par un circuit de transfert chaud 7 et un circuit de transfert froid 6 permettant d'intervenir de manière appropriée sur la température du fluide caloporteur.

En outre, le générateur thermique 1, 10, 100, 1', 1" selon l'invention présente un encombrement limité et nécessite moins de composants pour l'entraînement du fluide caloporteur que les générateurs connus de l'art antérieur, et donc moins d'énergie pour actionner ces moyens d'entraînement. En outre, le générateur selon l'invention permet également d'optimiser son rendement en évitant les effets négatifs des ponts thermiques dans les moyens d'entraînement du fluide caloporteur.

La présente invention n'est pas limitée aux exemples de réalisation décrits mais s'étend à toute modification et variante évidentes pour un homme du métier tout en restant dans l'étendue de la protection définie dans les revendications annexées. En particulier, bien que les exemples de réalisation décrits comportent un unique assemblage de deux modules magnétocaloriques 2, 3, 4, 5, 2', 3' l'invention prévoit également la possibilité d'augmenter le nombre d'assemblages dans un même générateur, pour augmenter la puissance thermique de ce dernier ou la différence de température entre ses extrémités chaude et froide.

## Revendications

1. Générateur thermique magnétocalorique (1, 10, 100, 1', 1") comportant au moins un assemblage d'au moins deux modules magnétocaloriques (2, 3, 4, 5, 2', 3') traversés par un fluide caloporteur mis en circulation par des moyens d'entraînement (212, 312, 412, 512, 422, 212', 312'), **caractérisé en ce que** chaque module magnétocalorique (2, 3, 4, 5, 2', 3') comporte au moins deux étages magnétocaloriques (210, 211, 310, 311, 410, 411, 420, 421, 430, 431, 510, 511, 520, 521, 530, 531, 610, 610', 611, 611', 710, 710', 711, 711') de matériau(x) magnétocalorique(s), lesdits au moins deux étages de chaque module étant constamment dans une phase magnétique différente, **en ce que** lesdits moyens d'entraînement (212, 312, 412, 512, 422) du fluide caloporteur sont disposés entre lesdits au moins deux étages de chaque module magnétocalorique pour les relier fluidiquement entre eux, **en ce que** les étages magnétocaloriques (210, 211, 310, 311, 410, 411, 420, 421, 430, 431, 510, 511, 520, 521, 530, 531, 610, 610', 611, 611', 710, 710', 711, 711') sont constitués par des matériaux magnétocaloriques agencés pour que l'effet magnétocalorique est sensiblement le même dans tous les étages magnétocaloriques, **en ce que** les extrémités froides (F2, F3, F4, F5, F6, F7) desdits modules magnétocaloriques (2, 3, 4, 5, 2', 3') sont reliées fluidiquement par un circuit de transfert froid (6) emprunté par ledit fluide caloporteur et destiné à échanger thermiquement par l'intermédiaire d'un échangeur thermique (61) avec un circuit externe, **en ce que** les extrémités chaudes (C2, C3, C4, C5, C6, C7) desdits modules magnétocaloriques (2, 3, 4, 5, 2', 3') sont reliées fluidiquement par un circuit de transfert chaud (7) emprunté par ledit fluide caloporteur et destiné à échanger thermiquement par l'intermédiaire d'un échangeur thermique (71) avec un circuit externe, et **en ce que** les échangeurs thermiques (61, 71) sont paramétrés pour que la différence de la température d'entrée et de sortie du fluide caloporteur dans lesdits échangeurs (61, 71) est sensiblement égale à la variation de température du fluide caloporteur au contact d'un étage magnétocalorique (210, 211, 310, 311, 410, 411, 420, 421, 430, 431, 510, 511, 520, 521, 530, 531, 610, 610', 611, 611', 710, 710', 711, 711') subissant l'effet magnétocalorique.

2. Générateur, selon la revendication 1, **caractérisé en ce que** lesdits modules magnétocaloriques (2, 3, 4, 5, 2', 3') comportent au moins deux sous-modules magnétocaloriques (21, 31, 41, 42, 43, 51, 52, 53, 21', 31') comprenant chacun au moins deux étages magnétocaloriques (210, 211, 310, 311, 410, 411, 420, 421, 430, 431, 510, 511, 520, 521, 530, 531, 610, 610', 611, 611', 710, 710', 711, 711') et **en ce que**, dans lesdits modules magnétocaloriques (2, 3, 4, 5, 2', 3'), lesdits sous-modules magnétocaloriques (21, 31, 41, 42, 43, 51, 52, 53, 21', 31') sont montés en parallèle.

3. Générateur, selon l'une des revendications 1 ou 2, **caractérisé en ce que** ledit sous-module (21', 31') comporte au moins deux groupes (G1, G2) d'étages magnétocaloriques (610, 610', 611, 611' ; 710, 710', 711, 711'), lesdits groupes (G1, G2) étant reliés fluidiquement entre eux par un moyen d'entraînement du fluide caloporteur (212', 312'), et **en ce que**, dans chaque groupe (G1, G2, G3, G4), les étages magnétocaloriques (610, 610', 611, 611' ; 710, 710', 711, 711') sont reliés en série.

4. Générateur, selon la revendication 3, **caractérisé en ce qu'**un échangeur thermique intermédiaire (81, 91) est disposé entre deux étages magnétocaloriques (610 et 610', 710 et 710', respectivement 611 et 611', 711 et 711') consécutifs desdits groupes (G1, G2).

5. Générateur, selon la revendication 4, **caractérisé en ce que** ledit échangeur thermique intermédiaire (81, 91) est relié à l'échangeur thermique (61, 71) d'un desdits circuits de transfert (6, 7).

6. Générateur, selon la revendication 4 ou 5, **caractérisé en ce que** les échangeurs thermiques intermédiaires (81) des groupes (G1, G3) reliés au circuit de transfert froid (6) sont reliés entre eux et **en ce que** les échangeurs thermiques intermédiaires (91) des groupes (G2, G4) reliés au circuit de transfert chaud (7) sont reliés entre eux.

7. Générateur (1, 10), selon l'une des revendications 1 ou 2, **caractérisé en ce que** lesdits moyens d'entraînement (212, 312, 412, 512) sont réalisés sous la forme de pistons à simple effet et **en ce que** la chambre (213, 313, 413, 513) de chaque piston est reliée fluidiquement auxdits étages magnétocaloriques (201, 211, 310, 311, 410, 411, 420, 421, 430, 431; 510, 511, 520, 521, 530, 531) d'un module magnétocalorique (2, 3, 4, 5).

8. Générateur (100), selon l'une des revendications 1 ou 2, **caractérisé en ce que** lesdits moyens d'entraînement (422) sont réalisés sous la forme d'un piston à double effet, et **en ce que** chaque chambre (423, 523) dudit piston (422) est reliée fluidiquement auxdits étages (410, 411, 420, 421, 430, 431 ; 510, 511, 520, 521, 530, 531) d'un module magnétocalorique (4, 5).

9. Générateur, selon l'une quelconque des revendications précédentes, **caractérisé en ce qu'**il comporte un système magnétique agencé pour soumettre les étages magnétocaloriques (210, 211, 310, 311, 410, 411, 420, 421, 430, 431, 510, 511, 520, 521, 530, 531, 610, 610', 611, 611', 710, 710', 711, 711') à un champ magnétique variable pour que les étages magnétocaloriques (211, 311, 411, 421, 431, 511, 521, 531) situés à l'extrémité froide (F2, F3, F4, F5) et les étages magnétocaloriques (410, 420, 430, 510, 520, 530) situés à l'extrémité chaude (C2, C3, C4, C5) sont constamment dans une phase différente d'échauffement ou de refroidissement.

10. Générateur, selon l'une quelconque des revendications précédentes, **caractérisé en ce que** les étages magnétocaloriques sont montés dans des supports en forme de disques (D1, D2, D3, D4, D5, D6, D7, D8, D7', D8'), chaque support comprenant au moins un étage magnétocalorique (210, 211, 310, 311, 410, 411, 420, 421, 430, 431, 510, 511, 520, 521, 530, 531, 610, 610', 611, 611', 710, 710', 711, 711') de chaque module magnétocalorique (2, 3, 4, 5, 2', 3').

11. Générateur, selon l'une quelconque des revendications précédentes, **caractérisé en ce que** lesdits moyens d'entraînement sont reliés entre des extrémités consécutives des étages magnétocaloriques qui ne sont pas situées au niveau des cotés froid et chaud des modules magnétocaloriques.

## Patentansprüche

1. Magnetokalorischer Wärmegenerator (1, 10, 100, 1', 1") mit zumindest einer Baugruppe mit zumindest zwei magnetokalorischen Modulen (2, 3, 4, 5, 2', 3'), die von einem durch Antriebsmittel (212, 312, 412, 512, 422, 212', 312') in Zirkulation gebrachten Wärmeübertragungsfluid durchflossen werden, **dadurch gekennzeichnet, dass** jedes magnetokalorische Modul (2, 3, 4, 5, 2', 3') zumindest zwei magnetokalorische Stufen (210, 211, 310, 311, 410, 411, 420, 421, 430, 431, 510, 511, 520, 521, 530, 531, 610, 610', 611, 611', 710, 710', 711, 711') aus magnetokalorischem(n) Material(ien) beträgt, wobei besagte zumindest zwei Stufen jedes Moduls sich ständig in einer unterschiedlichen magnetischen Phase befinden, dadurch, dass besagte Antriebsmittel (212, 312, 412, 512, 422) des Wärmeübertragungsfluids zwischen besagten zumindest zwei Stufen jedes magnetokalorischen Moduls angeordnet sind, um diese in Fluidverbindung miteinander zu setzen, dadurch, dass die magnetokalorischen Stufen (210, 211, 310, 311, 410, 411, 420, 421, 430, 431, 510, 511, 520, 521, 530, 531, 610, 610', 611, 611', 710, 710', 711, 711') aus magnetokalorischen Materialien bestehen, die so ausgelegt sind, dass das magnetokalorische Effekt in allen magnetokalorischen Stufen merklich das selbe ist, dadurch, dass die kalten Enden (F2, F3, F4, F5, F6, F7) von besagten magnetokalorischen Modulen (2, 3, 4, 5, 2', 3') über einen von besagtem Wärmeübertragungsfluid durchflossenen kalten Übertragungs-Kreislauf (6) in Fluidverbindung stehen, der dazu bestimmt ist, über einen Wärmetauscher (61) mit einem externen Kreislauf Wärme auszutauschen, dadurch, das die warmen Enden (C2, C3, C4, C5, C6, C7) von besagten magnetokalorischen Modulen (2, 3, 4, 5, 2', 3') über einen von besagtem Wärmeübertragungsfluid durchflossenen warmen Übertragungs-Kreislauf (7) in Fluidverbindung stehen, der dazu bestimmt ist, über einen Wärmetauscher (71) mit einem externen Kreislauf Wärme auszutauschen, und dadurch, dass die Wärmetauscher (61, 71) so parametriert sind, dass der Temperaturunterschied zwischen dem Einlass und dem Auslass des Wärmeübertragungsfluids in besagten Austauschern (61, 71) merklich gleich ist mit der Temperaturänderung des Wärmeübertragungsfluids, das mit einer dem magnetokalorischen Effekt unterzogenen magnetokalorischen Stufe (210, 211, 310, 311, 410, 411, 420, 421, 430, 431, 510, 511, 520, 521, 530, 531, 610, 610', 611, 611', 710, 710', 711, 711') in Berührung ist.

2. Generator nach Anspruch 1, **dadurch gekennzeichnet, dass** besagte magnetokalorische Module (2, 3, 4, 5, 2', 3') zumindest zwei magnetokalorische Untermodule (21, 31, 41, 42, 43, 51, 52, 53, 21', 31') aufweisen, die jeweils zumindest zwei magnetokalorische Stufen (210, 211, 310, 311, 410, 411, 420, 421, 430, 431, 510, 511, 520, 521, 530, 531, 610, 610', 611, 611', 710, 710', 711, 711') betragen, und dadurch, dass besagte magnetokalorische Untermodule (21, 31, 41, 42, 43, 51, 52, 53, 21', 31') in besagten magnetokalorischen Modulen (2, 3, 4, 5, 2', 3') parallel montiert sind.

3. Generator nach einem von Ansprüchen 1 oder 2, **dadurch gekennzeichnet, dass** besagtes Untermodul (21', 31') zumindest zwei Gruppen (G1, G2) magnetokalorischer Stufen (610, 610', 611, 611' ; 710, 710', 711, 711') beträgt, wobei besagte Gruppen (G1, G2) über ein Antriebsmittel des Wärmeübertragungsfluids (212', 312') miteinander in Fluidverbindung stehen, und dadurch, dass in jeder Gruppe (G1, G2, G3, G4) die magnetokalorischen Stufen (610, 610', 611, 611' ; 710, 710', 711, 711') seriell verbunden sind.

4. Generator nach Anspruch 3, **dadurch gekennzeichnet, dass** ein Zwischen-Wärmetauscher (81, 91) zwischen zwei aufeinander folgende magnetokalorische Stufen (610 und 610', 710 und 710', bzw. 611 und 611', 711 und 711') von besagten Gruppen (G1, G2) geschaltet ist.

5. Generator nach Anspruch 4, **dadurch gekennzeichnet, dass** besagter Zwischen-Wärmetauscher (81, 91) mit dem Wärmetauscher (61, 71) eines der beiden Übertragungs-Kreisläufe (6, 7) verbunden ist.

6. Generator nach Anspruch 4 oder 5, **dadurch gekennzeichnet, dass** die mit dem kalten Übertragungs-Kreislauf (6) verbundenen Zwischen-Wärmetauscher (81) der Gruppen (G1, G3) miteinander verbunden sind, und dass die mit dem warmen Übertragungs-Kreislauf (7) verbundenen Zwischen-Wärmetauscher (91) der Gruppen (G2, G4) miteinander verbunden sind.

7. Generator (1, 10) nach einem von Ansprüchen 1 oder 2, **dadurch gekennzeichnet, dass** besagte Antriebsmittel (212, 312, 412, 512) als einfachwirkende Kolben ausgebildet sind, und dadurch, dass die Kammer (213, 313, 413, 513) jedes Kolbens mit besagten magnetokalorischen Stufen (201, 211, 310, 311, 410, 411, 420, 421, 430, 431 ; 510, 511, 520, 521, 530, 531) eines magnetokalorischen Moduls (2, 3, 4, 5) in Fluidverbindung stehen.

8. Generator (100) nach einem von Ansprüchen 1 oder 2, **dadurch gekennzeichnet, dass** besagte Antriebsmittel (422) als einen doppeltwirkenden Kolben ausgebildet sind, und dadurch, dass jede Kammer (423, 523) von besagtem Kolben (422) mit besagten Stufen (410, 411, 420, 421, 430, 431 ; 510, 511, 520, 521, 530, 531) eines magnetokalorischen Moduls (4, 5) in Fluidverbindung steht.

9. Generator nach einem beliebigen der vorhergehenden Ansprüchen, **dadurch gekennzeichnet, dass** er ein magnetisches System beträgt, das ausgelegt ist, um die magnetokalorischen Stufen (210, 211, 310, 311, 410, 411, 420, 421, 430, 431, 510, 511, 520, 521, 530, 531, 610, 610', 611, 611', 710, 710', 711, 711') einem variablen Magnetfeld auszusetzen, damit die am kalten Ende (F2, F3, F4, F5) befindlichen magnetokalorischen Stufen (211, 311, 411, 421, 431, 511, 521, 531) und die am warmen Ende (C2, C3, C4, C5) befindlichen magnetokalorischen Stufen (410, 420, 430, 510, 520, 530) sich immer in einer unterschiedlichen Erwärmungs- oder Abkühlungsphase befinden.

10. Generator nach einem beliebigen der vorhergehenden Ansprüchen, **dadurch gekennzeichnet, dass** die magnetokalorischen Stufen in scheibenförmige Träger (D1, D2, D3, D4, D5, D6, D7, D8, D7', D8') montiert sind, wobei jeder Träger zumindest eine magnetokalorische Stufe (210, 211, 310, 311, 410, 411, 420, 421, 430, 431, 510, 511, 520, 521, 530, 531, 610, 610', 611, 611', 710, 710', 711, 711') jedes magnetokalorischen Moduls (2, 3, 4, 5, 2', 3') beträgt.

11. Generator nach einem beliebigen der vorhergehenden Ansprüchen, **dadurch gekennzeichnet, dass** besagte Antriebsmittel zwischen aufeinander folgenden Enden der magnetokalorischen Stufen verbunden sind, die sich nicht auf den kalten und warmen Seiten der magnetokalorischen Module befinden.

## Claims

1. Magnetocaloric heat generator (1, 10, 100, 1', 1") comprising at least one assembly of at least two magnetocaloric modules (2, 3, 4, 5, 2', 3') with a heat transfer fluid circulated by circulating means (212, 312, 412, 512, 422, 212', 312') flowing through them, **characterized in that** each magnetocaloric module (2, 3, 4, 5, 2', 3') comprises at least two magnetocaloric stages (210, 211, 310, 311, 410, 411, 420, 421, 430, 431, 510, 511, 520, 521, 530, 531, 610, 610', 611, 611', 710, 710', 711, 711') of magnetocaloric material(s), said at least two stages of each module being constantly in a different magnetic phase, **in that** said heat transfer fluid circulating means (212, 312, 412, 512, 422) are arranged between said at least two stages of each magnetocaloric module to connect them fluidly with each other, **in that** the magnetocaloric stages (210, 211, 310, 311, 410, 411, 420, 421, 430, 431, 510, 511, 520, 521, 530, 531, 610, 610', 611, 611', 710, 710', 711, 711') are made of magnetocaloric materials arranged so that the magnetocaloric effect is substantially the same in all magnetocaloric stages, **in that** the cold ends (F2, F3, F4, F5, F6, F7) of said magnetocaloric modules (2, 3, 4, 5, 2', 3') are in fluidic communication by means of a cold transfer circuit (6) used by said heat transfer fluid and intended for a heat exchange with an external circuit by means of a heat exchanger (61), **in that** the hot ends (C2, C3, C4, C5, C6, C7) of said magnetocaloric modules (2, 3, 4, 5, 2', 3') are in fluidic communication by means of a hot transfer circuit (7) used by said heat transfer fluid and intended for a heat exchange with an external circuit by means of a heat exchanger (71), and **in that** the heat exchangers (61, 71) are parameterized so that the difference of the inlet and outlet temperatures of the heat transfer fluid in said exchangers (61, 71) is substantially equal to the variation of the temperature of the heat transfer fluid in contact with a magnetocaloric stage (210, 211, 310, 311, 410, 411, 420, 421, 430, 431, 510, 511, 520, 521, 530, 531, 610, 610', 611, 611', 710, 710', 711, 711') subjected to the magnetocaloric effect.

2. Generator according to claim 1, **characterized in that** said magnetocaloric modules (2, 3, 4, 5, 2', 3') comprise at least two magnetocaloric sub-modules (21, 31, 41, 42, 43, 51, 52, 53, 21', 31') including each at least two magnetocaloric stages (210, 211, 310, 311, 410, 411, 420, 421, 430, 431, 510, 511, 520, 521, 530, 531, 610, 610', 611, 611', 710, 710', 711, 711') and **in that**, in said magnetocaloric modules (2, 3, 4, 5, 2', 3'), said magnetocaloric sub-modules (21, 31, 41, 42, 43, 51, 52, 53, 21', 31') are mounted in parallel.

3. Generator according to one of claims 1 or 2, **characterized in that** said sub-module (21', 31') comprises at least two groups (G1, G2) of magnetocaloric stages (610, 610', 611, 611'; 710, 710', 711, 711'), said groups (G1, G2) being in fluidic communication with each other thanks to a heat transfer fluid circulating means (212', 312') and **in that**, in every group (G1, G2, G3, G4), the magnetocaloric stages (610, 610', 611, 611'; 710, 710', 711, 711') are connected serially.

4. Generator according to claim 3, **characterized in that** an intermediate heat exchanger (81, 91) is arranged between two consecutive magnetocaloric stages (610 and 610', 710 and 710', respectively 611 and 611', 711 and 711') of said groups (G1, G2).

5. Generator according to claim 4, **characterized in that** said intermediate heat exchanger (81, 91) is connected to the heat exchanger (61, 71) of one of said transfer circuits (6, 7).

6. Generator according to claim 4 or 5, **characterized in that** the intermediate heat exchangers (81) of the groups (G1, G3) connected to the cold transfer circuit (6) are connected to each other and **in that** the intermediate heat exchangers (91) of the groups (G2, G4) connected to the hot transfer circuit (7) are connected to each other.

7. Generator (1, 10) according to one of claims 1 or 2, **characterized in that** said circulating means (212, 312, 412, 512) are realized in the form of single-acting pistons and **in that** the chamber (213, 313, 413, 513) of every piston is in fluidic communication with said magnetocaloric stages (201, 211, 310, 311, 410, 411, 420, 421, 430, 431 ; 510, 511, 520, 521, 530, 531) of a magnetocaloric module (2, 3, 4, 5).

8. Generator (100) according to one of claims 1 or 2, **characterized in that** said circulating means (422) are realized in the form of a double-acting piston and **in that** each chamber (423, 523) of said piston (422) is in fluidic communication with said stages (410, 411, 420, 421, 430, 431; 510, 511, 520, 521, 530, 531) of a magnetocaloric module (4, 5).

9. Generator according to any of the previous claims, **characterized in that** it comprises a magnetic system arranged to subject the magnetocaloric stages (210, 211, 310, 311, 410, 411, 420, 421, 430, 431, 510, 511, 520, 521, 530, 531, 610, 610', 611, 611', 710, 710', 711, 711') to a variable magnetic field so that the magnetocaloric stages (211, 311, 411, 421, 431, 511, 521, 531) located at the cold end (F2, F3, F4, F5) and the magnetocaloric stages (410, 420, 430, 510, 520, 530) located at the hot end (C2, C3, C4, C5) are constantly in a different heating or cooling phase.

10. Generator according to any of the previous claims, **characterized in that** the magnetocaloric stages are mounted in disk-shaped supports (D1, D2, D3, D4, D5, D6, D7, D8, D7', D8'), each support including at least one magnetocaloric stage (210, 211, 310, 311, 410, 411, 420, 421, 430, 431, 510, 511, 520, 521, 530, 531, 610, 610', 611, 611', 710, 710', 711, 711') of each magnetocaloric module (2, 3, 4, 5, 2', 3').

11. Generator according to any of the previous claims, **characterized in that** said circulating means are connected between consecutive ends of the magnetocaloric stages that are not located near the cold and hot sides of the magnetocaloric modules.
